# EUROPÄISCHE PATENTANMELDUNG

(11) **EP 4 015 830 A1**
(43) Veröffentlichungstag der Anmeldung: **22.06.2022**
(21) Anmeldenummer: 20215326.8
(22) Anmeldetag: 18.12.2020
(51) Int. Cl.: F04D 17/02, F04D 17/06, F01D 1/08, F01D 5/04, F04D 29/28

(54) **RADIALTURBOMASCHINE**

(71) Anmelder: Siemens Energy Global GmbH & Co. KG, 81739 München (DE)
(72) Erfinder: Jonen, Werner, 47051 Duisburg (DE)

(57) **Zusammenfassung**

Die Erfindung betrifft eine Radialturbomaschine (RTM) mit einem um eine Achse (X) drehbar angeordneten Rotor (R) umfassend mindestens eine Laufstufe (IMP), wobei die Laufstufe (IMP) eine Zuströmung (INL) aufweist,
wobei die Laufstufe (IMP) eine Vielzahl an Laufschaufeln (BLD) aufweist, die Strömungskanäle (FCH) der Laufstufe (IMP) in Umfangsrichtung (CDR) zueinander definieren, wobei die Laufstufe (IMP) einen Nabenabschnitt (HUB) aufweist, an dem die Laufschaufeln (BLD) angebracht sind,
wobei eine Nabenkontur (HCT) in dem Bereich der Anbringung der Laufschaufeln (BLD) die Strömungskanäle (FCH) teilweise definiert,
wobei die Laufschaufeln (BLD) sich senkrecht zu einer Hauptdurchströmungsrichtung (MFD) entlang einer Hauptdurchströmungslinie (MFL) für jeden Ort der Hauptdurchströmungslinie (MFL) senkrecht zu jeweiligen Hauptdurchströmungsrichtung (MDF) entlang einer Höhenrichtung erstrecken. Zur Senkung der Investitionskosten wird vorgeschlagen, dass die Laufstufe (IMP) derart ausgebildet ist, dass eine tangentiale Projektion einer Linie entlang einer mittleren Höhe der Laufschaufeln (BLD) einen Bogen von mindestens α = 150° Winkelüberschreitung beschreibt.

## Beschreibung

Die Erfindung betrifft eine Radialturbomaschine mit einem um eine Achse drehbar angeordneten Rotor umfassend mindestens eine Laufstufe, wobei die Laufstufe eine Zuströmung aufweist, wobei die Laufstufe eine Vielzahl an Laufschaufeln aufweist, die Strömungskanäle der Laufstufe in Umfangsrichtung zueinander definieren, wobei die Laufstufe einen Nabenabschnitt aufweist, an dem die Laufschaufeln angebracht sind, wobei eine Nabenkontur in dem Bereich der Anbringung der Laufschaufeln die Strömungskanäle teilweise definiert, wobei die Laufschaufeln sich senkrecht zu einer Hauptdurchströmungsrichtung entlang einer Hauptdurchströmungslinie für jeden Ort der Hauptdurchströmungslinie senkrecht zu jeweiligen Hauptdurchströmungsrichtung entlang einer Höhenrichtung erstrecken.

Aus der EP1965036A1 ist bereits eine Strömungsmaschine mit verstellbarer Strömungskontur bekannt.

Radialturbomaschinen sind entweder als Radialturboverdichter oder Radialturboexpander bekannt. Die nachfolgenden Ausführungen beziehen sich - wenn nicht anders angegeben - auf die Ausführung als Verdichter. Die Erfindung ist für Expander bzw. Turbinen grundsätzlich genauso anwendbar, wie für Verdichter, wobei ein Radialturboexpander gegenüber einem Radialturboverdichter im Wesentlichen eine umgekehrte Strömungsrichtung des Prozessfluids vorsieht.

Das globale Marktumfeld fordert Turbomaschinen mit niedrigen Investitionskosten. Zur Kostensenkung ist es besonders effektiv die Maschinen kompakter zu gestalten. Dabei kommt es insbesondere darauf an, den benötigten radialen oder axialen Bauraum zu reduzieren. Diese Maßnahme geht in der Regel mit einer Wirkungsgradverschlechterung einher.

Davon ausgehend hat es sich die Erfindung zur Aufgabe gemacht, die Kompaktheit zu verbessern, ohne die Aerodynamik unverhältnismäßig zu verschlechtern.

Zur Lösung der erfindungsgemäßen Aufgabe schlägt die Erfindung eine Strömungsführung eingangs genannter Art mit den zusätzlichen Merkmalen gemäß Anspruch 1 vor. Die Unteransprüche beinhalten vorteilhafte Weiterbildungen der Erfindung.

Die Begriffe axial, radial, tangential, Umfangsrichtung und ähnliche sind vorliegend - wenn nicht anders angegeben - jeweils auf die zentrale Achse bezogen, um die sich die Strömungsführung ringförmig erstreckt. Diese Achse ist bei einer Radialturbomaschine auch die Rotationsachse eines Rotors bzw. der Welle mit den Laufrädern.
Die Strömungsführung lenkt das Prozessfluid bogenfömig um, so dass bezüglich der Umlenkung der Begriff "radial" sich nicht auf die zentrale Achse bezieht, sondern auf die Biegung bzw. Krümmung der Umlenkung selbst.

In der Begriffswelt der Erfindung bedeutet ein Radialsegment einen radialen Abschnitt, der von mindestens einem anderen radialen Abschnitt der Strömungsführung zumindest entlang eines Abschnitts der Durchströmung der Strömungsführung mittels einer Trennung oder Trennwand getrennt ausgebildet ist.

Ein zu führendes Prozessfluid ist in der Regel das Strömungsfluid, das von der entsprechenden Turbomaschine bzw. Radialturbomaschine befördert wird oder das dem Betrieb der Turbomaschine im Wesentlichen als Antrieb oder Abtrieb dient. Das zu führende Prozessfluid ist hierbei das Medium, das hauptsächlich entweder signifikant technische Arbeit abgibt oder aufnimmt.
Unter dem Begriff "in einem Betrieb" versteht die Erfindung den Zustand des Betriebs der entsprechenden Maschine bzw. Turbomaschine, währenddessen sich beispielsweise der Rotor der Maschine dreht und eine Übertragung von technischer Arbeit auf das Strömungsfluid oder von dem Strömungsfluid fort erfolgt.

Unter einer parallelen Durchströmung versteht die Erfindung nicht zwingend die geometrisch parallele Durchströmung der verschiedenen Strömungskanäle durch ein Strömungsfluid, sondern bevorzugt die Aufteilung des Strömungsfluides in mehrere Teilströme, die die jeweiligen Strömungskanäle der erfindungsgemäßen Strömungsführung nebeneinander durchströmen, wobei sie in der Regel vor der Teilung einen gemeinsamen Hauptstrom bildeten und bevorzugt nach der erfindungsgemäßen Strömungsführung stromabwärts wieder zu einem gemeinsamen Hauptstrom vereinigt werden.

Unter einer Laufstufe versteht die Erfindung eine rotierende Beschaufelung. Eine derartig rotierende Beschaufelung kann als ein Laufrad ausgebildet sein, das beispielsweise auf eine Welle aufgeschrumpft ist. Alternativ ist es möglich, dass die Laufstufe aus einzelnen Schaufeln besteht, die entweder an einer Welle eines Rotors angebracht sind oder sogar einstückig mit dem Rotor bzw. der Welle ausgebildet sind.

In diesem Zusammenhang ist es eine vorteilhafte Weiterbildung der Erfindung, wenn insbesondere der Rotor mittels eines Verfahrens hergestellt wird, dass eine additive Fertigungsmethode umfasst, insbesondere mittels Stereolithografie (SL), Laser-Sintern (LS), Laser-Strahlschmelzen (Laser Beam Melting = LBM), Elektronen-Strahlschmelzen (Electron Beam Melting = EBM), Fused Layer Modelling/Manufacturing (FLM oder auch Fused Filament Fabrication (FFF)), Multi-Jet Modelling (MJM), Poly-Jet Modelling (PJM), 3-D-Drucken (3DP, auch Binder Jetting), Layer Laminated Manufacturing (LLM), Digital Light Processing (DLP), Thermotransfer-Sintern (TTS).

Dadurch, dass die Laufstufe derart ausgebildet ist, dass eine tangentiale Projektion einer Linie entlang einer mittleren Höhe der Laufschaufeln einen Bogen von mindestens α = 150° Winkelüberschreitung beschreibt, erreicht die erfindungsgemäße Turbomaschine, insbesondere in Axialrichtung, eine besonders kompakte Bauweise. Besonders bevorzugt bildet die Laufstufe mit der entsprechenden Beschaufelung eine im Wesentlichen sichelförmige Form aus, wobei sich eine im Wesentlichen axiale Zuströmung und eine im Wesentlichen axiale Abströmung ergibt. Die Hauptdurchströmungsrichtungen im Bereich der Zuströmung und im Bereich der Abströmung sind hierbei bevorzugt im Wesentlichen axial entgegengesetzt orientiert.

Eine vorteilhafte Weiterbildung der Erfindung sieht vor, dass eine zweite Strömungsführung direkt stromaufwärts der Laufstufe angeordnet ist. Auf diese Weise ergibt sich vorteilhaft eine Vorbereitung der Geschwindigkeitsverteilung und der Ausrichtung des zuströmenden Prozessfluids für die Laufstufe bzw. erste Laufstufe.

Hierbei kann vorteilhaft die zweite Strömungsführung Bestandteil eines stehenden Stators sein. Eine derartige Ausbildung sieht eine robuste aerodynamische Vorbereitung des Prozessfluids auf den Eintritt in die Laufstufe vor.

Alternativ kann der Rotor als ein erster Rotor ausgebildet sein und die zweite Strömungsführung Bestandteil eines gegenläufigen zweiten Rotors sein. Auf diese Weise wird der zweite Rotor genutzt, um die vorbereitende Ausrichtung des Prozessfluids auf den Eintritt in die Laufstufe des ersten Rotors durchzuführen. Hierbei ist zu beachten, dass in der Beschreibung und Definition der Erfindung die Bezeichnung der Laufstufen bezüglich der Nummerierung nach der Erfindung entgegen der Strömungsrichtung vorgenommen ist.

Eine vorteilhafte Weiterbildung der Erfindung sieht vor, dass eine dritte Strömungsführung direkt stromaufwärts der zweiten Strömungsführung angeordnet ist. Hierbei kann die erste Strömungsführung als eine erste Laufstufe ausgebildet sein und die dritte Strömungsführung kann Bestandteil des Rotors der ersten Laufstufe sein, so dass die dritte Strömungsführung eine zweite Laufstufe ist.

Eine weitere vorteilhafte Weiterbildung sieht vor, dass die zweite Laufstufe eine im Wesentlichen axiale Zuströmung und eine im Wesentlichen axiale Abströmung aufweist, insbesondere mit gleicher axialer Ausrichtung. Auf diese Weise ist eine direkte Zuspeisung des Prozessfluids aus der zweiten Laufstufe in die erste Laufstufe möglich.

Grundsätzlich lässt sich eine Anordnung nach der Erfindung als Verdichter oder als Turbine ausbilden, wobei bei einer Turbine im Wesentlichen eine Umkehr der Strömungsrichtung vorgesehen ist. Bei der Ausbildung der Radialturbomaschine nach der Erfindung als Verdichter ist die Durchströmungsrichtung in der Regel von radial innen nach radial außen ausgebildet.

Eine vorteilhafte Weiterbildung der Erfindung sieht vor, dass die Radialturbomaschine als eine Turbine ausgebildet ist. Zweckmäßig ist die Durchströmungsrichtung einer derartigen Turbine bevorzugt von radial außen nach radial innen ausgerichtet. Insbesondere bei einer Ausbildung der erfindungsgemäßen Radialturbomaschine als Turbine ist es zweckmäßig, wenn die zweite Strömungsführung als ein verstellbarer Eintrittsleitapparat ausbildet ist. Dieser verstellbare Eintrittsleitapparat wird zunächst von dem Prozessfluid erreicht, bevor das Prozessfluid die Laufstufe durchströmt, so dass der Eintrittsleitapparat in Abhängigkeit von dem Betriebspunkt der Radialturbomaschine das Prozessfluid aerodynamisch auf den Eintritt in die Laufstufe bzw. erste Laufstufe für einen optimalen Wirkungsgrad vorbereitet.

Ist die erfindungsgemäße Radialturbomaschine - wie zuvor beschrieben - mit zwei Rotoren ausgebildet, die bevorzugt sich gegenläufig drehen, ist es zweckmäßig, wenn die jeweilige Drehbewegung der beiden Rotoren mittels eines Getriebes gekoppelt ist, wobei das Getriebe bevorzugt als ein Planetengetriebe ausgebildet sein kann.

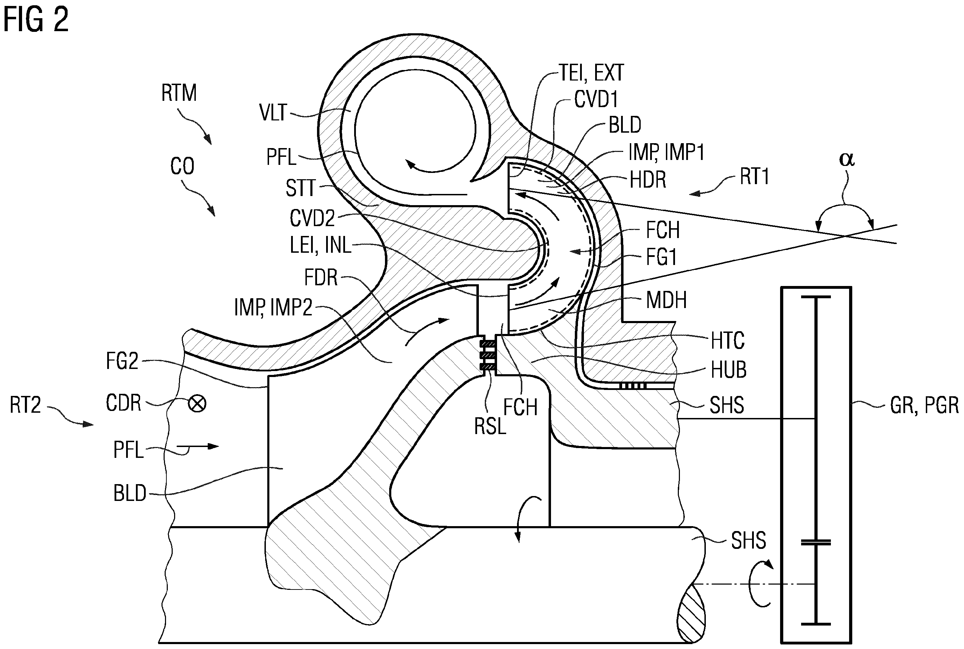

Eine vorteilhafte Weiterbildung sieht vor, dass die Laufstufe IMP gegenüber dem Nabenabschnitt und/oder als Fortsetzung des Nabenabschnitts (nur Figur 2) in Strömungsrichtung als Begrenzung der Strömungskanäle zusätzlich eine Deckscheibe aufweist.

Im Folgenden ist die Erfindung anhand spezieller Ausführungsbeispiele unter Bezugnahme auf Zeichnungen näher erläutert. Es zeigen jeweils als schematischer axialer Längsschnitt:
- Figur 1:: eine erfindungsgemäße Radialturbomaschine mit zwei Laufstufen, die ein Prozessfluid verdichten,
- Figur 2:: eine erfindungsgemäße Radialturbomaschine mit zwei Laufstufen, die das Prozessfluid verdichten, wobei die erste Laufstufe und die zweite Laufstufe in entgegengesetzter Richtung rotieren,
- Figur 3: eine erfindungsgemäße Radialturbomaschine als Turbine mit einer Laufstufe, wobei die Radial-turbomaschine von radial außen nach radial innen durchströmt wird und das Prozessfluid expandiert wird.

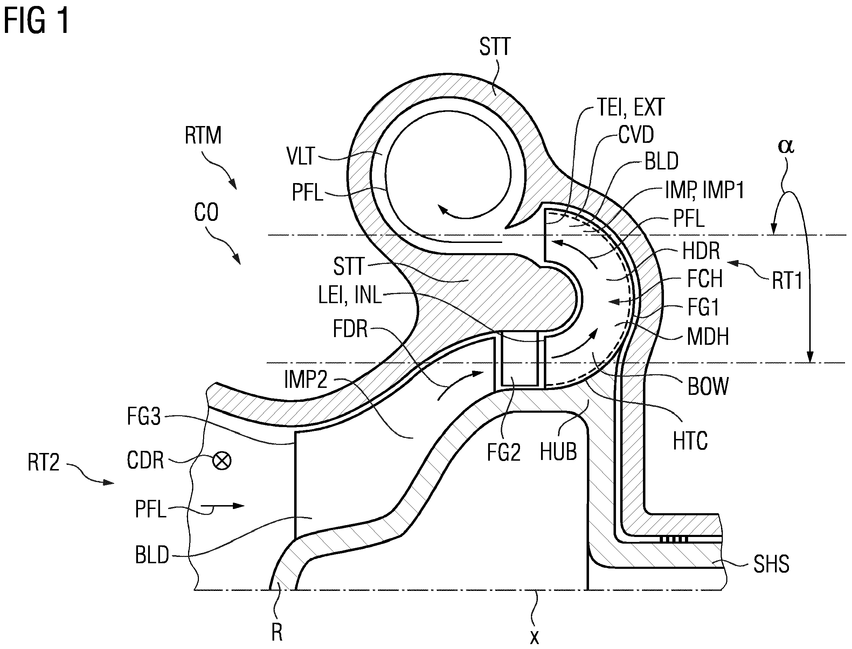

Figur 1 und Figur 2 zeigen in einem schematischen Längsschnitt entlang einer Achse X eine erfindungsgemäße Radialturbomaschine RTM, die als Verdichter CO ausgebildet ist. Die Radialturbomaschine RTM wird im Wesentlichen von radial innen nach radial außen von einem Prozessfluid PFL durchströmt. Um die Achse X dreht sich ein Rotor R, der Schaufeln BLD zweier Laufstufen IMP, einer ersten Laufstufe IMP1 und einer zweiten Laufstufe IMP2 trägt. Die Schaufeln BLD teilen einen sich in Umfangsrichtung CDR erstreckenden Ringraum in Strömungskanäle FCH auf, so dass parallele Teilströme die Laufstufen IMP, IMP1, IMP2 durchströmen. Entgegen einer Durchströmungsrichtung FDR sind die Laufstufen IMP, IMP1, IMP2 nummeriert, so dass die erste Laufstufe IMP1 stromabwärts der zweiten Laufstufe IMP2 befindlich ist.

Eine Welle SHS des Rotors R ist hohl ausgebildet, so dass sich eine geringere Masse ergibt und niedrigere Fliehkräfte bei der Rotation entstehen. Neben dem Rotor R umfasst die Radialturbomaschine RTM in dem dargestellten Ausschnitt auch einen Stator STT, der eine zweite Strömungsführung FG2 trägt. Bei der in der Figur 1 dargestellten Ausführungsform liegt die zweite Strömungsführung hinsichtlich der Durchströmungsrichtung FDR zwischen der rotierenden dritten Strömungsführung FG3 bzw. der zweiten Laufstufe IMP2 und der rotierenden ersten Strömungsführung FG1 bzw. der ersten Laufstufe IMP1. Das Prozessfluid PFL strömt axial der dritten Strömungsführung FG3 bzw. der zweiten Laufstufe IMP2 zu und strömt im Wesentlichen axial aus der zweiten Laufstufe IMP2 aus. Weiter stromabwärts erreicht das Prozessfluid PFL die zweite Strömungsführung FG2, die im Wesentlichen als eine Leitschaufel ausgebildet ist und als stehende Strömungsführung das Prozessfluid PFL aerodynamisch auf die stromabwärts befindliche erste Laufstufe IMP1 vorbereitet. Das Prozessfluid PFL strömt im Wesentlichen axial der ersten Laufstufe IMP1 zu und verlässt die erste Laufstufe IMP1 ebenfalls im Wesentlichen axial, wobei eine axial entgegengesetzte Strömungsrichtung als bei der Zuströmung vorliegt. Eine im Wesentlichen sichelförmige Geometrie der ersten Laufstufe IMP1 sorgt für eine Umlenkung des Prozessfluids PFL bzw. der Strömungsrichtung FDR des Prozessfluids PFL um nahezu 180°. Erfindungsgemäß ist eine Umlenkung α um mindestens 150° mittels der ersten Laufstufe IMP1 vorgesehen. Ausgehend von der Laufstufeneintrittskante LEI am Einlass bzw. an der Zuströmung INL der ersten Laufstufe IMP1 bis zu der Laufstufenhinterkante TEI an der Abströmung EXT der ersten Laufstufe IMP1 erstreckt sich die Laufschaufel BLD im Wesentlichen sichelförmig, so dass eine Umlenkung der Strömungsrichtung FDR des Prozessfluids PFL um mindestens 150°, hier dargestellt im Wesentlichen 180° stattfindet. Stromabwärts der ersten Laufstufe IMP1 strömt das Prozessfluid in eine Zusammenführung, die als Spirale VLT (ca. nur 1x 360° Erstreckungswinkel in Umfangsrichtung, wie in einschlägigen Strömungsmaschinen üblich) sich ringförmig um die Achse X erstreckt.

Die in den Figur 2 dargestellte erfindungsgemäße Radialturbomaschine RTM weist im Wesentlichen die gleichen Merkmale auf, die die Radialturbomaschine RTM der Figur 1 aufweist, wobei ebenfalls eine Ausführung als Verdichter CO vorliegt. Der Unterschied zwischen den beiden Ausführungen liegt darin, dass die Ausführung der Figur 2 nicht nur einen einzelnen - mit einer einheitlichen Drehzahl im Betrieb rotierenden Rotor R aufweist, sondern einen ersten Rotor RT1 und einen zweiten Rotor RT2, die im Betrieb eine unterschiedliche Drehzahl aufweisen. Die zweite Laufstufe IMP2 dreht sich gegenläufig zu der ersten Laufstufe IMP1. Besonders bevorzugt ist die Radialturbomaschine RTM derart ausgebildet, dass im Betrieb die Drehzahl der stromaufwärts befindlichen zweiten Laufstufe IMP2 bzw. des stromaufwärts befindlichen zweiten Rotors RT2 betragsmäßig höher ist als die Drehzahl der ersten Laufstufe IMP1 bzw. des ersten Rotors RT1. Dieses bevorzugte Weiterbildungsmerkmal gilt für alle erfindungsgemäßen zweirotorigen Verdichter CO. Hierbei ist die Drehbewegung der beiden Rotoren RT1, RT2 bevorzugt mittels eines Getriebes GR gekoppelt, wobei das Getriebe GR bevorzugt als Planetengetriebe PGR ausgebildet ist.

Eine aerodynamische Vorbereitung für den Eintritt des Prozessfluids PFL in die erste Laufstufe IMP1 erfolgt bereits mittels der Durchströmung der zweiten Laufstufe IMP2, die stromaufwärts der ersten Laufstufe IMP1 angeordnet ist, so dass eine dazwischen befindliche statische Strömungsführung nicht notwendig ist. In der Begriffswelt der Erfindung bedeutet damit, dass die erste Laufstufe IMP1 der Figur 2 als eine erste Strömungsführung FG1 ausgebildet ist und die zweite Laufstufe IMP2, stromaufwärts angeordnet, als eine zweite Strömungsführung FG2 angeordnet ist. Einer dritten Strömungsführung FG3 bedarf es bei der Ausführung der Figur 2 nicht. Die vorteilhafte Raumersparnis, insbesondere in Axialrichtung, erreicht die Ausführung von der Figur 2 ebenfalls mittels des Umlenkungswinkels α von mindestens 150°. An dem Übergang von dem ersten Rotor RT1 zu dem zweiten Rotor RT2 ist im Bereich des Strömungskanals FCH eine Rotordichtung RSL vorgesehen, die bevorzugt als Labyrinthdichtung ausgebildet ist, so dass im Wesentlichen das Prozessfluid PFL nicht aus dem Strömungskanal FCH austritt. Andere Dichtungstypen sind auch möglich.

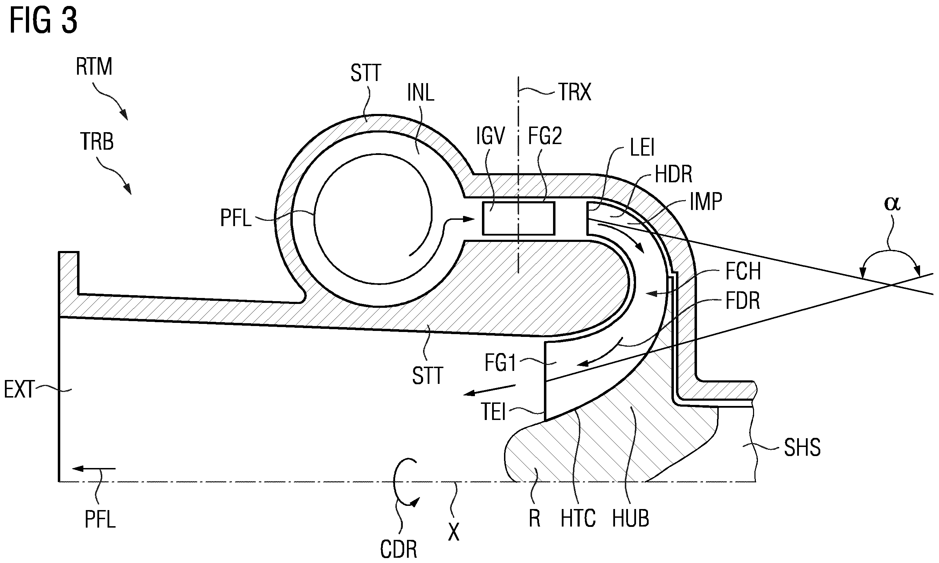

Die Ausführungsform der Radialturbomaschine RTM nach der Erfindung, die in Figur 3 dargestellt ist, zeigt eine Turbine TRB, in der ein Prozessfluid PFL expandiert wird. Eine wesentliche Hauptdurchströmungsrichtung erstreckt sich hierbei von radial außen nach radial innen, so dass die Zuströmung INL im Wesentlichen als eine Spirale des Stators STT ausgebildet ist und eine Abströmung EXT im Wesentlichen axial in einen Axialdiffusor (sich aufweitend) erfolgt, wobei das Laufrad bzw. die Laufstufe IMP fliegend an einer Welle SHS angeordnet ist. Auch die Anordnung gemäß Figur 3 spart axialen Bauraum, in dem das Prozessfluid PFL in der ersten Laufstufe IMP1 um mindestens 150° (α) umgelenkt wird. Aufwärts der ersten Strömungsführung FG1 bzw. der ersten Laufstufe IMP1 befindet sich eine zweite Strömungsführung FG2, die als Eintrittsleitapparat IGV ausgebildet ist, so dass das zugeleitete Prozessfluid aerodynamisch auf den Eintritt in die erste Laufstufe IMP1 vorbereitet ist.

Die Ausbildungen der Figuren 1, 2 und 3 eignen sich besonders gut für eine Anordnung als Verdichter oder als Turbine an einem Getriebeverdichter, da alle Ausführungen eine axiale Zu- oder Abströmung vorsehen und eine fliegende Anordnung der Laufradkonstruktion bzw. der Laufstufen. Unter einer fliegenden Anordnung versteht die Erfindung, dass nur auf einer axialen Seite der Laufstufe eine Wellenlagerung für den Rotor vorgesehen ist und die andere axiale Seite eine Strömungsführung (Zuströmung bzw. Ansaugung oder Abströmung) im Bereich einer gedachten axialen Verlängerung der Welle SHS vorsieht, so dass dort der Rotor keine Lagerung aufweist. Die axiale Zu- bzw. Abströmung ist aerodynamisch besonders vorteilhaft und mechanisch besonders platzsparend.

In den Figuren 1, 2 ist optional dargestellt, dass die Laufstufe IMP gegenüber dem Nabenabschnitt HUB und/oder als Fortsetzung des Nabenabschnitts HUB (nur Figur 2) in Strömungsrichtung als Begrenzung der Strömungskanäle FCH zusätzlich eine Deckscheibe CVD, CVD1, CVD2 aufweist.

## Patentansprüche

1. Radialturbomaschine (RTM) mit einem um eine Achse (X) drehbar angeordneten Rotor (R) umfassend mindestens eine Laufstufe (IMP), wobei die Laufstufe (IMP) eine Zuströmung (INL) aufweist,
wobei die Laufstufe (IMP) eine Vielzahl an Laufschaufeln (BLD) aufweist, die Strömungskanäle (FCH) der Laufstufe (IMP) in Umfangsrichtung (CDR) zueinander definieren, wobei die Laufstufe (IMP) einen Nabenabschnitt (HUB) aufweist, an dem die Laufschaufeln (BLD) angebracht sind,
wobei eine Nabenkontur (HCT) in dem Bereich der Anbringung der Laufschaufeln (BLD) die Strömungskanäle (FCH) teilweise definiert,
wobei die Laufschaufeln (BLD) sich senkrecht zu einer Hauptdurchströmungsrichtung (MFD) entlang einer Hauptdurchströmungslinie (MFL) für jeden Ort der Hauptdurchströmungslinie (MFL) senkrecht zu jeweiligen Hauptdurchströmungsrichtung (MDF) entlang einer Höhenrichtung (HDR) erstrecken,
**dadurch gekennzeichnet, dass**
die Laufstufe (IMP) derart ausgebildet ist, dass eine tangentiale Projektion einer Linie entlang einer mittleren Höhe (MDH) der Laufschaufeln (BLD) einen Bogen (BOW) von mindestens α = 150° Winkelüberschreitung beschreibt.

2. Radialturbomaschine (RTM) nach Anspruch 1,
wobei die Laufstufe (IMP) eine im Wesentlichen axiale Zuströmung (INL) und eine im Wesentlichen axiale Abströmung (EXT) aufweist.

3. Radialturbomaschine (RTM) nach Anspruch 2,
wobei die jeweilige Hauptdurchströmungsrichtung (MFD) im Bereich der Zuströmung (INL) und im Bereich der Abströmung (EXT) zueinander im Wesentlichen axial entgegengesetzt orientiert sind.

4. Radialturbomaschine (RTM) nach mindestens einem der vorhergehenden Ansprüche 1 bis 3,
wobei eine zweite Strömungsführung (FG2) direkt stromaufwärts der Laufstufe (IMP) angeordnet ist.

5. Radialturbomaschine (RTM) nach Anspruch 4,
wobei die zweite Strömungsführung (FG2) Bestandteil eines stehenden Stators (STT) ist.

6. Radialturbomaschine (RTM) nach Anspruch 4,
wobei der Rotor (R) als ein erster Rotor (RT1) ausgebildet ist und die zweite Strömungsführung (FG2) Bestandteil eines gegenläufigen zweiten Rotors (RT2) ist.

7. Radialturbomaschine (RTM) nach Anspruch 4 oder 5,
wobei eine dritte Strömungsführung (FG3) direkt stromaufwärts der zweiten Strömungsführung (FG2) angeordnet ist.

8. Radialturbomaschine (RTM) nach Anspruch 7,
wobei die mindestens eine Laufstufe (IMP) eine erste Laufstufe (IMP1) ist,
wobei die dritte Strömungsführung (FG3) Bestandteil des Rotors (R) ist und die dritte Strömungsführung (FG3) als eine zweite Laufstufe (IMP2) ausgebildet ist.

9. Radialturbomaschine (RTM) nach Anspruch 8,
wobei die zweite Laufstufe (IMP2) eine im Wesentlichen axiale Zuströmung (INL) und eine im Wesentlichen axiale Abströmung (EXT) aufweist, insbesondere mit gleicher axialer Ausrichtung.

10. Radialturbomaschine (RTM) nach mindestens einem der vorhergehenden Ansprüche 1 bis 9,
wobei die Radialturbomaschine (RTM) als eine einstufige Turbine (TRB) ausgebildet ist, deren Durchströmungsrichtung (FDR) von radial außen nach radial innen ausgerichtet ist.

11. Radialturbomaschine (RTM) nach mindestens einem der vorhergehenden Ansprüche 1 bis 9,
wobei die Radialturbomaschine (RTM) als Verdichter (CO) ausgebildet ist, deren Durchströmungsrichtung (FDR) von radial innen nach radial außen ausgebildet ist.

12. Radialturbomaschine (RTM) nach Anspruch 10,
wobei die zweite Strömungsführung (FG2) als ein verstellbarer Eintrittsleitapparat (IGV) ausgebildet ist.

13. Radialturbomaschine (RTM) nach Anspruch 6,
wobei ein Getriebe vorgesehen ist, das die Drehbewegung des ersten Rotors (RT1) mit der Drehbewegung des zweiten Rotors (RT2) koppelt.

14. Radialturbomaschine (RTM) nach einem der vorhergehenden Ansprüche,
wobei die Laufstufe (IMP) gegenüber dem Nabenabschnitt (HUB) und/oder als Fortsetzung des Nabenabschnitts (HUB) in Strömungsrichtung als Begrenzung der Strömungskanäle (FCH) zusätzlich eine Deckscheibe (CVD, CVD1, CVD2) aufweist.
